**Europäisches Patentamt**

**European Patent Office**

**Office européen des brevets**

(11) Veröffentlichungsnummer: **0 471 963 A2**

## EUROPÄISCHE PATENTANMELDUNG

(21) Anmeldenummer: **91111188.8**

(22) Anmeldetag: **05.07.91**

(51) Int. Cl.5: **A01M 7/00**

(30) Priorität: **14.08.90 DE 4025915**

(43) Veröffentlichungstag der Anmeldung:
**26.02.92 Patentblatt 92/09**

(84) Benannte Vertragsstaaten:
**CH DE DK FR GB LI NL**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Wiemeyer, Benno**
**Im Sande 6**
**W-4531 Lotte-Halen(DE)**

(54) Spritzvorrichtung zum Ausbringen von flüssigen Spritzmitteln.

(57) Spritzvorrichtung zum Ausbringen von flüssigen Spritzmitteln, z.B. von Düngemitteln und/oder Unkrautvernichtungsmitteln und/oder Pflanzenschutzmitteln auf landwirtschaftlichen Kulturpflanzen (Kulturen), bestehend aus einem an einem Fahrzeug befestigbaren Spritzenträger (5) sowie aus einem am Spritzenträger (5) in unterschiedlichen Höhenlagen einstellbar gehaltenen horizontalen, sich senkrecht zur Fahrtrichtung des Fahrzeuges erstreckenden, als Ausleger ausgebildeten Spritzgestänge (10) mit einer Vielzahl von an diesem Ausleger vorgesehenen Düsen (17), deren Austrittsöffnungen mit ihren die Düsenrichtung bestimmenden Achsen beim Gebrauch der Vorrichtung nach unten gerichtet sind, wobei beim Gebrauch der Vorrichtung die unteren Auslegerteile (14) eine über die Düsen (17) in Düsenrichtung nach unten vorstehende Umlegerkante bilden sowie sich über die Länge des Auslegers und dabei quer bzw. senkrecht zur Fahrtrichtung (19) des Fahrzeuges erstrecken und in Fahrtrichtung (19) gesehen vor den Düsen (17) angeordnet ist. Um mit der gattungsgemäßen Spritzvorrichtung den aufgewachsenen Getreidebestand zu gezielten Halmbehandlung auf einfachste Weise zu öffnen und die Abtrift der zerstäubten Spritzmitteltröpfchen nahezu zu elemenieren, ist vorgesehen, daß das Spritzgestänge (10) in Fahrtrichtung (19) gesehen, auf seiner Rückseite (18) einen Freiraum (20) zur Arretierung der Düsen (17,39) in unterschiedlichen Höhen- und/oder Winkellagen gegenüber dem Spritzgestänge (10) aufweist.

FIG. 4

Die Erfindung betrifft eine Spritzvorrichtung zum Ausbringen von flüssigen Spritzmitteln gemäß Oberbegriff des Patentanspruches 1.

Derartig ausgebildete Spritzvorrichtungen sind durch die DE-PS 35 09 040 bekannt. Diese Spritzvorrichtungen weisen jeweils ein an einem Spritzenträger in unterschiedlichen Höhenlagen einstellbares, sich quer zur Fahrtrichtung erstreckendes, als Ausleger ausgebildetes Spritzgestänge auf. An den gelenkig miteinander verbundenen Abschnitten des Spritzgestänges sind eine Vielzahl von Düsen in gleichmäßigen Abständen nebeneinander angeordnet. Die Spritzgestänge weisen einen oberen und einen unteren Gurt auf, wobei diese beiden Gurte über Quergurte miteinander verbunden sind. Der Untergurt dient als Umleger für hochständige Pflanzen. An den einzelnen Abschnitten des Spritzgestänges sind jeweils zwei Arme im Abstand voneinander vorgesehen, die mit ihrer Längserstreckung parallel sowie quer zur Längserstreckung des Auslegers liegen. An den beiden Armen jedes Abschnittes ist jeweils ein an seiner Unterseite die Düsen aufweisendes Rohrstück angeordnet. Mit Führungselementen ist das jeweilige Rohrstück horizontal zu seiner Längserstreckung verschiebbar. Durch die verschiebbare Führung der Rohrstöcke kann der effektive Abstand, den die Düsen von dem Umleger in horizontaler Richtung aufweisen, vergrößert oder verkleinert werden. Hierdurch soll erreicht werden, daß die mit den Düsen zu erzielende Spritzwirkung optimal an die jeweilige Höhe der Pflanzen angepaßt werden kann. Bei noch jüngeren, niedrigeren Pflanzen, die auch durch den Umleger noch nicht so stark umgelegt werden, wird ein kleinerer horizontaler Abstand der Düsen vom Umleger gewählt als bei älteren, bereits höher aufgewachsenen Pflanzen. Hierdurch soll erreicht werden, daß sich die Düsen genau in den Bereich der geöffneten Bestandslücke verstellen lassen.

Zum Ausbringen der Spritzflüssigkeit in einen aufgewachsenen Pflanzenbestand wird die Höhenlage des Auslegers mittels einer Hubeinrichtung derart eingestellt, daß der Umleger den oberen Bereich der Pflanzen erfaßt und den Pflanzenbestand während des Spritzvorganges somit öffnet. Hierdurch wird erreicht, daß die Düsen hauptsächlich in einen durch den Umleger vom Getreide freigelegten Bereich Spritzen. Dieses wiederum soll eine weit geringere Abtrift des Spritzmittels auch beim Ausbringen bei Wind ergeben.

Die Eintauchtiefe des Umlegers in den Getreidebestand wird also durch das Einstellen der Höhenlage des Auslegers gegenüber dem Getreide vorgewählt, wobei die mit den Düsen zu erzielende Spritzwirkung in Abhängigkeit der jeweiligen Pflanzenhöhe durch Veränderung des Düsenabstandes in horizontaler Richtung vom Umleger eingestellt wird. Dieses wiederum weist den Nachteil auf, daß sich die Düsen bei niedrigerem Getreidebestand, bei dem der Umleger nicht so weit in den Getreidebestand hineinragt, in einem relativ großen Abstand zur Getreidebestandsoberfläche befinden. Hierbei weisen sie z.B. bei der Halmbehandlung einen großen Abstand von ihrer Zielfläche, den Getreidehalmen, auf. Da die wichtigsten Einflußfaktoren für die Abtrift von Spritzmittelpartikel die Witterung, Tropfengröße und Fahrgeschwindigkeit sind, wirkt der sich zwischen der zu behandelnden Zielfläche und den Düsen sowie der zwischen der Getreidebestandsoberfläche und den Düsen bestehende große Abstand in unerwünschter Weise begünstigend auf die Abtrift der feinverstäubten Spritzmitteltropfen aus. Dieses trifft insbesondere auf den atmosphärischen Abtriftanteil zu, also auf die feinen Tropfen, die bedingt durch den großen Abstand der Düsen zur Zielfläche nicht im engeren Umkreis zu Boden sinken bzw. an den Getreidehalmen angelagert werden, sondern in der Luft weiträumig fortschweben oder verdampfen. Dieser atmosphärische Abtriftanteil vermag auch nicht durch den sich bei der DE-PS 35 09 040 im Bereich der sich durch die umgelegten Pflanzen freigegebenen Freiraum, in welchem das jeweilige Spritzmittel ausgebracht wird und welcher zum Fahrzeug hin durch eine erste Wandung und oberhalb der Düsen durch eine zweite Wandung abgeschirmt ist, so daß das Ausbringen des Spritzmittels in einem geschütztem Raum erfolgt, aus welchem das Spritzmittel auch durch Windeinflüsse nicht austragbar sein soll, reduziert werden.

Durch den sich bei niedrig aufgewachsenem Pflanzenbestand ergebenen großen Abstand der Düsen zur behandelnden Zielfläche ist die Schaffung dieses geschützten Raumes durch die beiden Wandungen sicherlich erforderlich, um die Windeinschlüsse zu reduzieren. Aber bedingt durch den großen Abstand zwischen den Düsen und der zu behandelnden Zielfläche kommt es zu einer Abnahme der Fluggeschwindigkeit der von den Düsen zerstäubten Tröpfchen des Spritzmittels in Richtung auf die Zielfläche, wodurch Teile der Tröpfchenwolken nicht die Zielfläche erreichen, sondern weiträumig fortschweben oder verdampfen. Zur Anlagerung der Tröpfchen an den Getreidebestand wird eine bestimmte Fluggeschwindigkeit benötigt, die bei normalem Spritzstahl nur auf einer kurzen Strecke (Abstand) zwischen Düse und Zielfläche gewährleistet ist, so daß selbst diese Maßnahmen mit der Anordnung der Wandungen am Spritzgestänge nicht zu einer Abtriftverminderung, insbesondere des atmosphärischen Abtriftanteiles geeignet sind.

Unabhängig von den vorab geschilderten Nachteilen stellt diese bekannte Spritzvorrichtung eine einen großen technischen Aufwand aufweisende Lösung dar, um die gelenkig miteinander verbundenen Auslegerabschnitte von der ausgeklappten Arbeitsstellung in die zusammengeklappte Transportstellung zu überführen. Die zweite sich horizontal oberhalb des Spritzgestänges nach hinten erstreckende Wandung muß zusammen mit den Düsen für den Nichtgebrauch an den jeweiligen Abschnitt des Auslegers geklappt werden, damit sich der Ausleger für die Transportstellung kompakt zusammenklappen läßt.

Desweiteren sind in der ackerbaulichen Praxis am Spritzgestänge einer Feldspritze zu befestigende Rohrkonstruktionen bekannt, die etwa 10 cm vor und je nach Aufwuchshöhe des Kulturpflanzenbestandes bis 30 cm unter den Düsen angeordnet sind, als Bestandsöffner dienen und als sogenannte "Crop Tilter" bezeichnet werden. Diese Rohrkonstruktionen drücken in der Fahrt die Getreidehalme nach vorne und schaffen dadurch eine Bestandslücke, in die die Düsen hineinstäuben. Hierbei wird das Spritzgestänge dann etwa 10 - 20 cm an die Bestandsoberkante herangeführt, wodurch die Angriffsfläche der von den Düsen erzeugten Spritzstrahlen für den Wind reduziert werden sollen.

Auch diese Spritzvorrichtungen sind mit dem bereits erläuterten Nachteilen hinsichtlich der Abtrift behaftet. Weiterhin stellen diese technischen Lösungen hinsichtlich der konstruktiven Ausführungsformen Probleme dar, da die als Bestandsöffner dienenden, zusätzlichen Rohrkonstruktionen das Spritzgestänge zum einen nicht sonderlich vergrößern dürfen und zum anderen aber eine große Stabilität erfordern. Beide Forderungen lassen sich jedoch nicht gleichzeitig erfüllen.

Der Erfindung liegt nun die Aufgabe zugrunde, mit der gattungsgemäßen Spritzvorrichtung den aufgewachsenen Getreidebestand zu gezielten Halmbehandlung auf einfachste Weise zu öffnen und die Abtrift der zerstäubten Spritzmitteltröpfchen nahezu zu elemenieren.

Diese Aufgabe wird in erfindungsgemäßer Weise dadurch gelöst, daß das Spritzgestänge, in Fahrtrichtung gesehen, auf seiner Rückseite einen Freiraum zu Arretierung der Düsen in unterschiedlichen Höhen- und/oder Winkellagen gegenüber dem unteren Gurt des Spritzgestänges aufweist.

Infolge dieser Maßnahmen läßt sich die Höhenlage der Düsen in vertikaler Richtung und in bezug auf den unteren, als Umleger dienenden Gurt einstellen. Hierdurch ist der Abstand der Düsen und der zu behandelnden Zielfläche exakt der jeweils vorherrschenden Aufwuchshöhe des zu behandelnden Pflanzenbestandes in der Weise anpaßbar, daß die unteren Kanten der Spritzdüsen in etwa einen Abstand von ca. 5 cm zur Kulturpflanzenoberfläche aufweisen, wenn der Umleger oder Bestandsöffner etwa 1/3 in den aufgewachsenen Kulturpflanzenbestand eintaucht. Versuche haben ergeben, daß bei einer Führung der Düsen in etwa 5 cm über den Kulturpflanzen die Abtrift durch Wind auf ein Minimum reduziert werden kann und beim Eintauchen des Bestandsöffners von 1/3 in den aufgewachsenen Kulturpflanzenbestand, d.h., wenn der Bestandsöffner die Pflanzen im Bereich von 2/3 ihrer Aufwuchshöhe umlegt, eine optimale Bestandslücke erzeugt wird, in die die Düsen hineinstäuben. Die Düsen weisen hierdurch einen optimalen Abstand zur Bestandsoberfläche und der zu behandelnden Zielfläche auf, somit ist es möglich, alle zerstäubten Tröpfchen nahezu verlustfrei und ohne Belastungen des Anwenders und des Naturhaushaltes auf den jeweiligen Zielflächen anzulagern. Der atmosphärische Abtriftanteil der weiträumig in der Luft fortschwebenden oder verdampfenden Tröpfchenwolken wird also nahezu eleminiert, was eine erhebliche Reduzierung der Umweltbelastung bei effektivsten Spritzmitteleinsatz und bei minimalster Spritzmittelaufwandmenge bedeutet.

Weiterhin weist diese konstruktive Ausgestaltung entscheidende wirtschaftliche Vorteile auf, da keine zusätzlichen Anschaffungskosten für zusätzliche Vorrichtungen zum Öffnen des Kulturpflanzenbestandes erforderlich sind, da der Bestandöffner gleichzeitig von dem die Spritzdüsen tragenden Spritzgestänge gebildet wird.

Die Anpassung der Eintauchtiefe des Umlegers in den Pflanzenbestand in bezug zur Anordnung der Düsen oberhalb des Pflanzenbestandes sowie das optimale Einrichten der von den Düsen erzeugten Spritzkegel in Richtung auf die zu behandelnde Zielfläche wird in erfindungsgemäßer Weise dadurch erreicht, daß sich der Freiraum in Höhenrichtung im Bereich zwischen dem oberen und dem unteren Gurt des Spritzgestänges und in Fahrtrichtung in einem Abstand hinter den Spritzgestängeabschnitten des Auslegers erstreckt.

Weiterhin ist es erfindungsgemäß vorgesehen, daß der Freiraum so bemessen ist, so daß sich die Spritzgestängeabschnitte unabhängig von der jeweiligen Düsenarretierung am Spritzgestänge von der Arbeits- in die Transportstellung überführen lassen.

Damit der Abstand der Düsen zur jeweiligen Zielfläche, unter Berücksichtigung der Eintauchtiefe des unteren Gurtes in den Pflanzenbestand, für die unterscheidlichen Aufwuchshöhen erreichenden, verschiedenen Kulturpflanzen und den unterschiedlichen Wachstumstadien dieser Pflanzen exakt angepaßt werden kann, ist erfindungsgemäß vorgesehen, daß der geringste Abstand zwischen dem oberen und dem unteren Gurt des Spritzgestänges in etwa dem maximalen Verstellbereich der einstellbaren, unterschiedlichen Höhenlagen der Düsen gegenüber dem unteren Gurt des Spritzgestänges entspricht, wobei der Verstellbereich der Höhenund/oder Winkellagen der Düsen auf die maximale Wachstumshöhe der zu behandelnden Kulturpflanzen von z.B. 1,2 m abgestimmt ist. Hierbei sind die Düsen, in Fahrtrichtung gesehen, in einem Abstand von ca. 10 cm hinter den Spritzgestängeabschnitten des Auslegers angeordnet.

Zur einfachen und mit wenigen Handgriffen auszuführenden Veränderung der Höhenlage der Düsen gegenüber des als Umlegers für die Pflanzen dienenden unteren Gurtes des Spritzgestänges ist erfindungsgemäß vorgesehen, daß die Düsen eines jeden Spritzgestängeabschnittes an einer Düsenleiste angeordnet sind. Hierzu sind die Düsenleisten mittels Schnellverschlüsse in unterschiedlichen Höhen- und/oder Winkellagen an den jeweiligen Spritzgestängeabschnitten des Auslegers befestigt.

Eine sehr einfache Umrüstung der Spritzvorrichtung, um auf verschiedene Weise die zu verteilende Flüssigkeit auszubringen, wird dadurch erreicht, daß die Düsen eines jedem Spritzgestängeabschnittes an einer Düsenleiste angeordnet, welche abnehmbar und austauschbar an dem Spritzgestänge angeordnet sind. Infolge dieser Maßnahme werden erstmals austauschbare Düsenleisten vorgeschlagen. Für jede Spritzvorrichtung sind Düsenleisten mit verschiedenartig ausgebildeten Düsen oder Ausbringorganen, beispielsweise sog. Schleppschläuchen vorgesehen, welche gegeneinander durch einfaches Austauschen der Düsenleisten an dem Spritzgestänge zu befestigen sind. Es braucht nicht mehr in mühevoller und zeitaufwendiger Weise jede einzelne Düse oder Ausbringorgan ausgetauscht zu werden, denn die Düsenleisten werden mit einer großen Anzahl von Düsen oder Ausbringorganen ausgewechselt.

Damit sich das Spritzgestänge auf einfachste Weise für die verschiedenen, unterschiedlichen Düsenarten erfordernden Einsatzzwecke schnell und einfach umrüsten läßt, ist erfindungsgemäß vorgesehen, daß die Düsenleisten gegen Düsenleisten mit andersartig ausgebildeten Düsen, z.B. für die Flüssigdüngung etc., komplett und einfach austauschbar sind.

Ebenfalls ist es möglich, daß für die verschiedenen Einsatzzwecke mehrere, unterschiedliche Düsenarten aufweisende Düsenleisten gleichzeitig am Ausleger angeordnet sind.

Damit es zu keiner Beschädigung der Kulturpflanzen durch in den Pflanzenbestand eintauchende Spritzgestängebereiche kommt, ist erfindungsgemäß vorgesehen, daß das Spritzgestänge eine über die gesamte Breite des Spritzgestänges sich erstreckende Schutzvorrichtung aufweist, wobei sich die Schutzvorrichtung zumindest im Bereich der über die Düsen in Düsenrichtung nach unten zu verstellenden Umlegerkante erstreckt. Hierbei ist die Schutzvorrichtung in unterschiedlichen Positionen am Spritzgestänge befestigbar.

In einer Ausführungsform ist erfindungsgemäß vorgesehen, daß die Schutzvorrichtung ein nach hinten offenes, der Fahrtrichtung entgegengerichtetes, einen in bezug auf den unteren Gurt größeren Radius aufweisendes Abweiselement ist. Hierdurch wird erreicht, daß die von der am unteren Gurt befestigten Schutzvorrichtung umgelegten Pflanzen besonders schonend behandelt werden.

Damit das Ein- und Ausklappen des Spritzgestänges in die Transport- bzw. Arbeitsstellung nicht eingeschränkt wird und das Öffnen des Bestandes auf schonende Weise erfolgt, ist erfindungsgemäß vorgesehen, daß die Schutzvorrichtung aus mehreren, den einzelnen Abschnitten des Spritzgestänges entsprechenden, drehbar gelagerten Abweiselementen besteht.

Zur optimalen Einstellung an die jeweils vorherrschenden Einsatzbedingungen ist vorgesehen, daß die Schutzvorrichtung in vertikaler Ebene verstellbar am Spritzgestänge anbringbar ist, daß die Schutzvorrichtung das Spritzgestänge nach unten in einstellbaren Abständen überragt, wobei die Schutzvorrichtung mittels Schnellverschlüsse in unterschiedlichen Höhen- und/oder Winkellagen an den jeweiligen Spritzgestängeabschnitten des Auslegers befestigbar ist.

Weitere Einzelheiten der Erfindung sind der Beispielsbeschreibung und den Zeichnungen zu entnehmen. Hierbei zeigt

Fig. 1     die in erfindungsgemäßer Weise ausgerüstete, sich in Arbeitsstellung befindliche Feldspritze in der Ansicht von hinten,

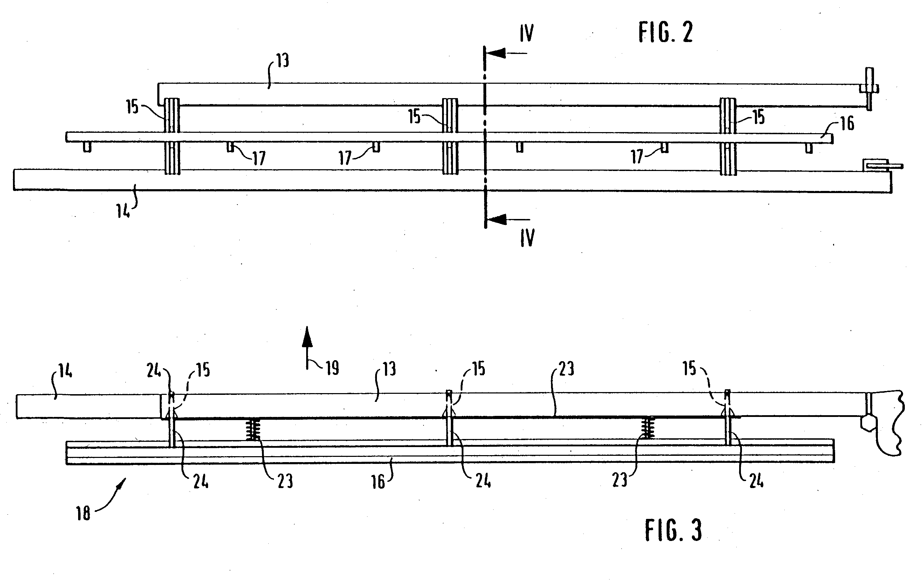

Fig. 2     Prinzipdarstellung des linken äußeren Auslegerabschnittes des Spritzgestänges, gemäß Fig. 1, in vergrößertem Maßstab und in der Ansicht von hinten,

Fig. 3     den Auslegerabschnitt gemäß Fig. 2 in der Draufsicht,

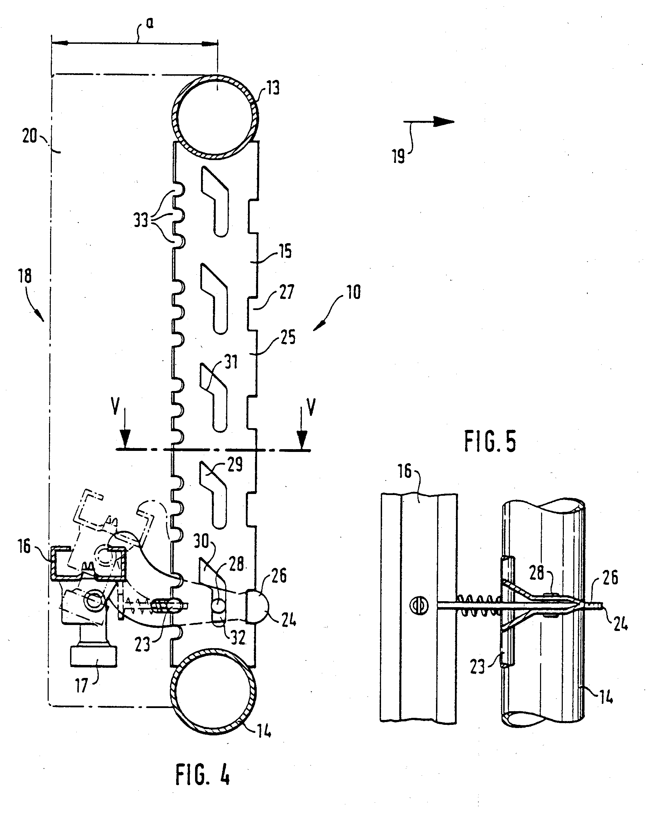

Fig. 4     Schnittdarstellung durch den Auslegerabschnitt, gemäß Fig. 2, in der Ansicht IV - IV in vergrößertem Maßstab,

Fig. 5     Teilansicht des Auslegerabschnittes, gemäß Fig. 4, in der Ansicht V - V,

Fig. 6     Prinzipdarstellung und Düsenanordnung des erfindungsgemäßen Spritzgestänges, wobei ein sehr niedriger Pflanzenbestand behandelt wird,

Fig. 7     Prinzipdarstellung und Düsenanordnung des erfindungsgemäßen Spritzgestänges, wobei der Getreidebestand durch den unteren Gurt geöffnet wird und eine niedrige Aufwuchshöhe aufweist,

Fig. 8     Prinzipdarstellung und Düsenanordnung des erfindungsgemäßen Spritzgestänges entsprechend Fig. 7, wobei der Getreidebestand eine mittlere Aufwuchshöhe aufweist,

Fig. 9 Prinzipdarstellung und Düsenanordnung des erfindungsgemäßen Spritzgestänges, entsprechend Fig. 7, wobei der Getreidebestand eine hohe Aufwuchshöhe aufweist,

Fig. 10 die Feldspritze mit an Düsenleisten angeordneten Schleppschläuchen in Arbeitsstellung in Prinzipdarstellung und in der Ansicht von hinten,

Fig. 11 in Prinzipdarstellung den linken äußeren Auslegerabschnitt des Spritzgestänges gemäß Fig. 10 in vergrößertem Maßstab und in der Ansicht von hinten,

Fig. 12 Schnittdarstellung durch den Auslegerabschnitt gemäß Fig. 11 in der Ansicht XII - XII in vergrößertem Maßstab und

Fig. 13 Prinzipdarstellung des Spritzgestänges, welches mit einer mit Schleppschläuchen ausgerüsteten Düsenleiste versehen ist, bei der Ausbringarbeit in Seitenansicht.

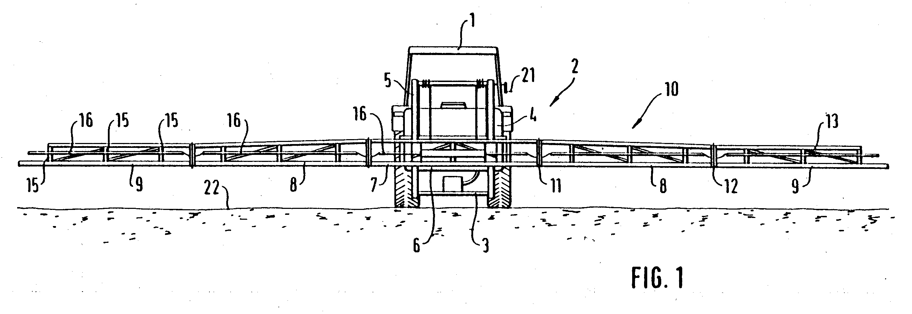

Die Fig. 1 zeigt die an den Ackerschlepper 1 mittels der Dreipunkthydraulik in bekannter Weise angebaute Feldspritze 2. Diese Feldspritze 2 weist den Rahmen 3 auf, in dem der Flüssigkeitstank 4 befestigt ist. Auf der Rückseite des Flüssigkeitstanks 4 befindet sich der rahmenartige Spritzenträger 5, an welchem der Tragrahmen 6 in vertikaler Richtung höhenbeweglich verschiebbar geführt ist. An diesem Tragrahmen 6 ist in bekannter Weise der mittlere Auslegerabschnitt 7 befestigt, an dessen Enden sich jeweils die Auslegerabschnitte 8 und 9 anschließen und das sich in Arbeitsstellung quer zur Fahrtrichtung erstreckende Spritzgestänge 10 bilden. Die einzelnen Auslegerabschnitte 7, 8 und 9 sind mittels der aufrechten Gelenkachsen 11 und 12 miteinander verbunden. Um diese Gelenkachsen 11 und 12 lassen sich die einzelnen Auslegerabschnitte 8 und 9 von der gezeigten Arbeitsstellung in die bekannte und daher nicht näher dargestellte Transportstellung überführen.

Die einzelnen Auslegerabschnitte 7, 8 und 9 weisen jeweils den oberen, als Querträger 13 ausgebildeten Gurt und den ebenfalls als Querträger 14 ausgebildeten unteren Gurt auf. Die Verbindung dieser beiden Gurte 13 und 14 erfolgt mittels der in gleichmäßigen Abständen zueinander angeordneten Quergurte 15. An diesen Quergurten 15 sind die den einzelnen Auslegerabschnitten 7, 8 und 9 zugeordneten Düsenleisten 16 mit ihren in gleichmäßigen Abständen zueinander angeordneten Düsen 17 höhenbeweglich befestigt. Die Düsenleisten 16 lassen sich auf der Rückseite 18, in Fahrtrichtung 19 gesehen, innerhalb des mit strichpunktierten Linien dargestellten Freiraumes 20 in unterschiedlichen Höhen- und/oder Winkellagen gegenüber dem unteren Gurt 14 des Spritzgestänges 10 verstellen. Die Düsenleisten 16 befinden sich in einem Abstand a von ca. 10 cm hinter den Querträgern 13 bzw. 14. Mittels der Höhenverstelleinrichtung 21 läßt sich das Spritzgestänge 10 in unterschiedlichen Höhenlagen gegenüber dem Boden 22 einstellen.

Die Düsenleisten 16 sind mittels der die Schnellverschlüsse 23 aufweisenden Arretierungseinrichtung 24, welche mit den als Halterungsvorrichtung 25 für die Düsenleisten 16 ausgebildeten, in gleichmäßigen Abständen zueinander angeordnete, die beiden Querträger 13 und 14 miteinander verbindenden Quergurte 15 zusammenwirken. Hierbei wird die Düsenleiste 16 von hinten in die jeweiligen V-förmig ausgebildeten Halterungsvorrichtungen 25 eingeführt, wobei die jeweilige Höhenlage durch das Einführen der jeweiligen Nase 26 der Arretierungseinrichtung 24 in den der gewünschten Anbauhöhe der Düsenleisten 16 entsprechenden Schlitz 27 der Halterungsvorrichtung 25 erfolgt. Hiernach wird die jeweilige Düsenleiste an ihrer Rückseite derart angehoben, so daß der jeweilige Führungsbolzen 28 in den oberen Bereich 29 der Führungsschlitze 30 eingreift. Hiernach wird die Düsenleiste 16 wieder nach unten verschwenkt und der Führungsbolzen 28 gleitet entlang der Führungsfläche 31 in den senkrecht verlaufenden Teilbereich 32 des jeweiligen Führungsschlitzes 30. Gleichzeitig rastet der als federbelastetes Rundeisen ausgebildete Schnellverschluß 23 entsprechend der gewünschten Winkellage, der an den Düsenleisten 16 angeordneten Düsen 17, in eine der Rasten 33 ein. Soll die Winkellage der mit durchgezogenen Linien dargestellten Düsen 17 in die mit strichpunktierten Linien dargestellte Position überführt werden, wird der federbelastete, das durchgehende Rundeisen aufweisende Schnellverschluß 23 in Richtung auf die Düsenleiste 16 bewegt, so daß der Schnellverschluß 23 in die obere Raste 33 einrastet. Sollte es sich als notwendig erweisen, läßt sich selbstverständlich vor dem unteren Querträger 14 noch ein weiterer Querträger anordnen.

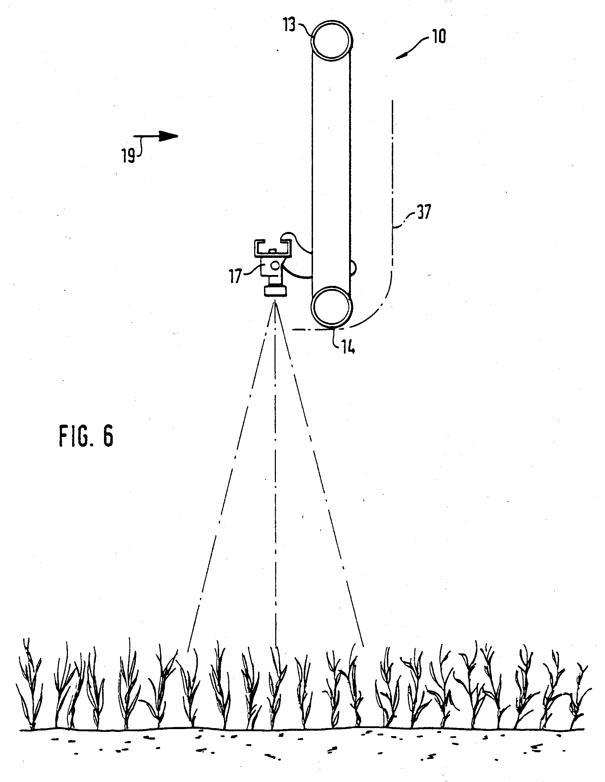

Die Fig. 6 zeigt die schematische Darstellung des Spritzgestänges 10 und die Anordnung der Düsen 17 in einer derartigen Höhenlage gegenüber dem unteren Querträger 14, die für das Besprühen eines niedrig aufgewachsenen Kulturpflanzenbestandes sinnvoll ist.

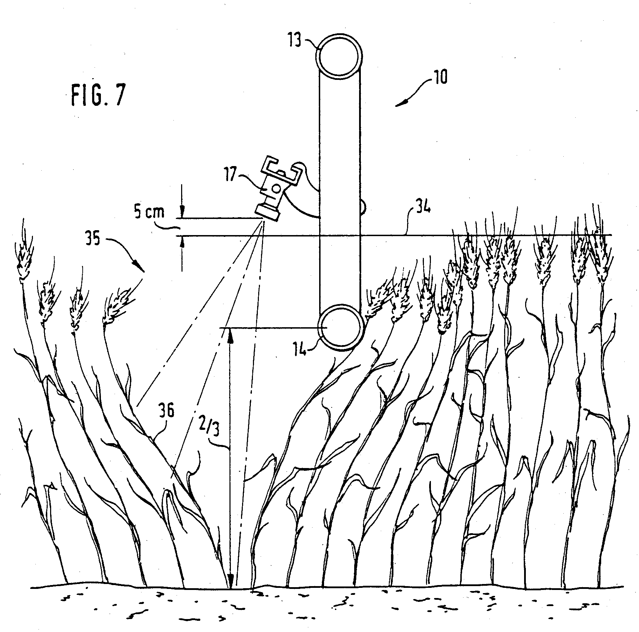

In Fig. 7 dient der untere Gurt 14 des Spritzgestänges 10 als Umleger oder Bestandsöffner des aufgewachsenen, beispielsweise als Getreidepflanzen ausgebildeten Kulturpflanzenbestandes. Dadurch, daß sich die Höhen- und/oder Winkellage der an den Düsenleisten 16 angeordneten Düsen 17 in bezug auf den unteren Gurt 14 einstellen läßt, ist es möglich, daß der untere Gurt 14 des Spritzgestänges 10 1/3 in den Getreidebestand eintaucht und die Düsen 17 in einem Abstand von 5 cm zur Getreidebestandsoberfläche 34 einstellbar ist. Hierdurch wird eine optimale Bestandslücke 35 geschaffen, in welche die Düsen 17 hineinstäuben. Durch die Verstellung der Höhenlage der Düsen 17 gegenüber der unteren Umlegerkante des unteren Gurtes 14 läßt sich der Abstand der Düsen 17 zur jeweiligen Zielfläche exakt einstellen.

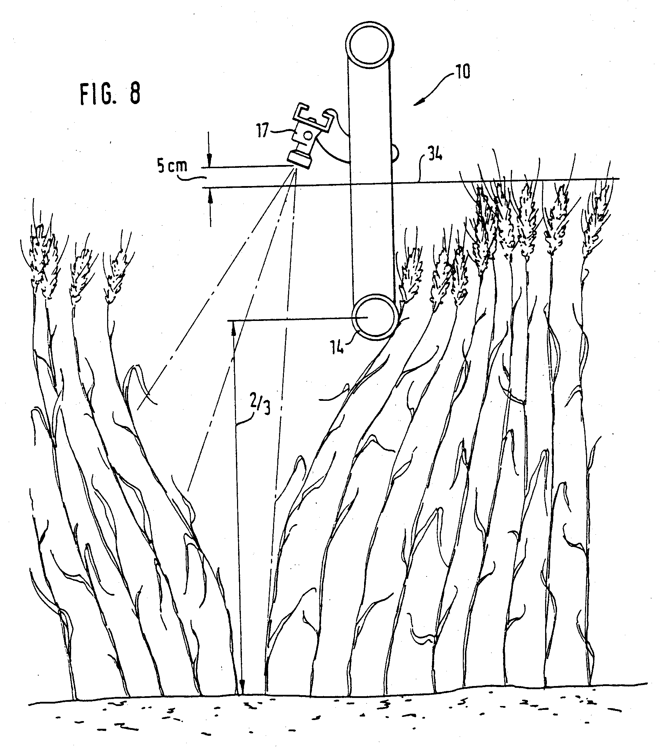

Die Fig. 8 zeigt das gleiche Spritzgestänge 10, bei dem die Düsen 17 einen größeren Abstand zu dem unteren Gurt 14 des Spritzgestänges 10 aufweisen. Dieser größere Abstand kommt dadurch zustande, daß die Getreidepflanzen eine größere Aufwuchshöhe aufweisen, wobei der untere Gurt 14 des Spritzgestänges 10 ebenfalls 1/3 in den Getreidebestand hineinragt und die Düsen in dem Abstand von 5 cm über der Getreidebestandsoberfläche geführt werden.

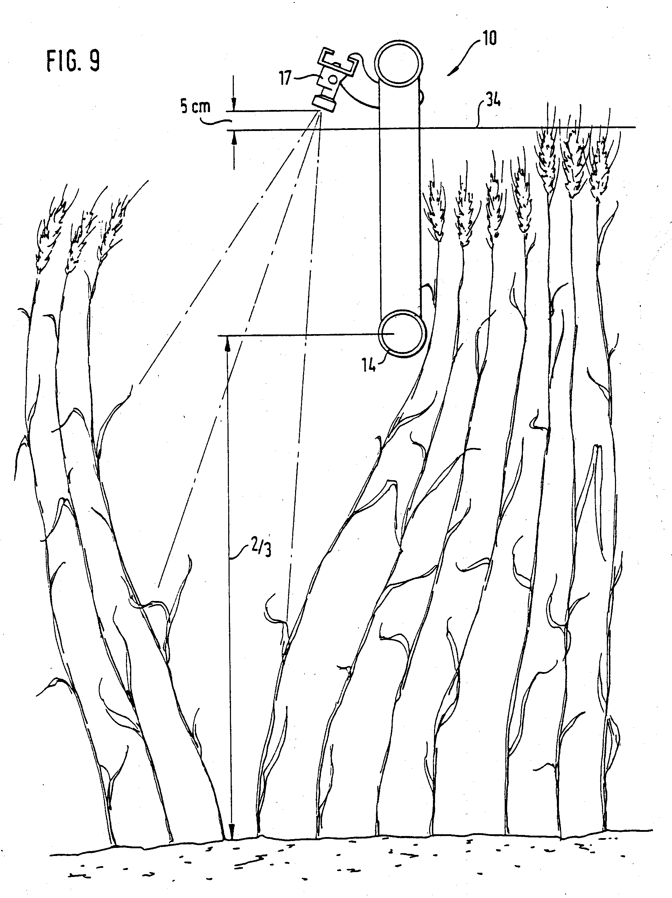

Die Fig. 9 zeigt das Spritzgestänge 10, welches in den höchstmöglichen Kulturpflanzenbestand, hier Getreidepflanzen, eintaucht. Damit die Empfehlung, daß der Bestandsöffner, welcher von dem unteren Gurt 14 gebildet wird, 1/3 in den Pflanzenbestand eintaucht und gleichzeitig die Spritzdüsen 17 in einem Abstand von 5 cm oberhalb der Oberfläche 34 des Pflanzenbestandes geführt werden kann, müssen die Düsen 17 in die oberste Stellung am Spritzgestänge 10 befestigt werden. Hierbei weisen die Düsen 17 dann den größten Abstand zum unteren Gurt 14 auf. Bedingt dadurch, daß der untere Gurt 14 1/3 in den Pflanzenbestand eintaucht, wird auch hier eine optimale Bestandslücke 35 erzeugt, in welche die Düsen 17 hineinstäuben.

Da die Düsen 17, wenn der untere Gurt 14 des Spritzgestänges 10 in einen Kulturpflanzenbestand eintaucht derart eingestellt werden, daß sie einen Abstand von 5 cm zur Pflanzenbestandsoberfläche aufweisen, sind die von den Düsen 17 zerstäubten Spritzmittelwölckchen am wenigsten windanfällig, d.h., die Abtrift der Tröpfchenwolken durch Wind wird nahezu eliminiert, da dieser geringe Abstand der Düsen 17 gegenüber der Pflanzenbestandsoberfläche dem Wind keine Angriffsfläche bietet. Zu dem ist die Fluggeschwindigkeit der Tröpfchenwolken in diesem Bereich kurz unterhalb der Düse so groß, daß sie nicht von den beim Spritzen zulässigen Windgeschwindigkeiten fortgetragen werden, sondern sich an der bestimmungsgemäßen Zielfläche anlagern. Die Möglichkeit der Anordnung der Spritzdüsen 17 in unterschiedlichen Höhenlagen, in bezug auf den unteren Gurt 14 des Spritzgestänges 10, erlaubt beim Eintauchen des unteren Gurtes 14 in einen Kulturpflanzenbestand, daß sich der Abstand der Düsen 17 zur bestimmungsgemäßen Zielfläche des zu behandelnden Pflanzenbestandes auf ein Minimum einstellen läßt, wodurch der atmosphärische Abtriftanteil der Tröpfchenwolken nahezu eleminiert wird.

Zur Vermeidung von Schäden beim Öffnen des zu behandelnden Pflanzenbestandes kann es sinnvoll sein, die mit strichpunktierten Linien dargestellte Schutzvorrichtung 37 im Bereich des unteren, als Bestandsöffner dienenden Gurtes 14 vorzusehen.

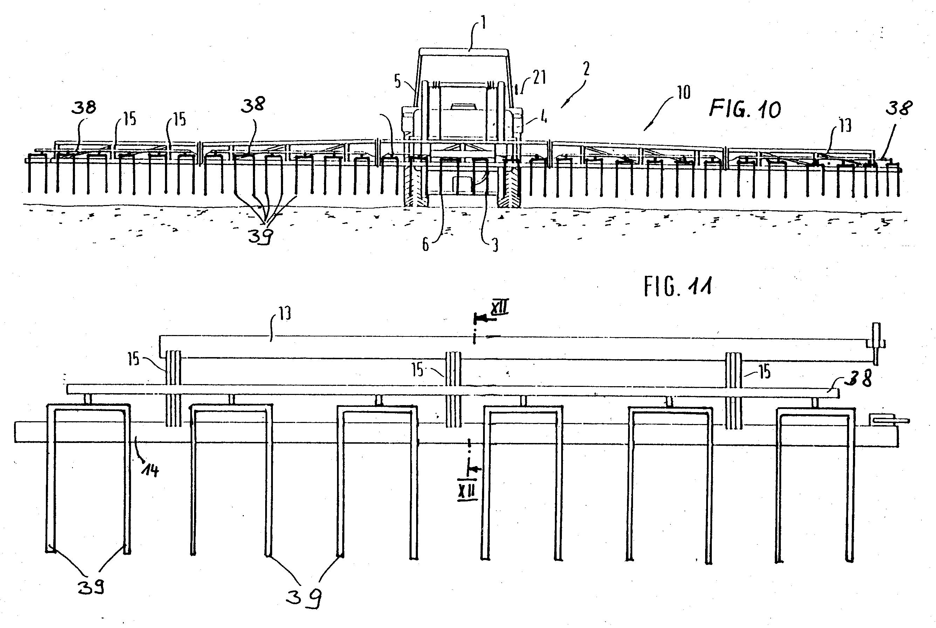

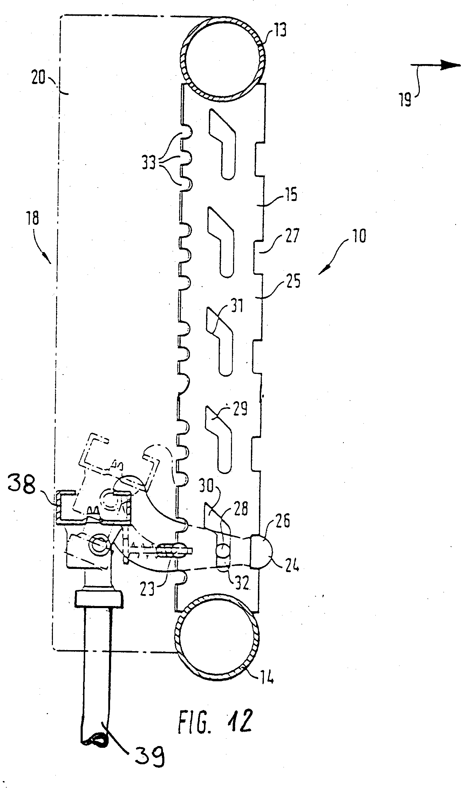

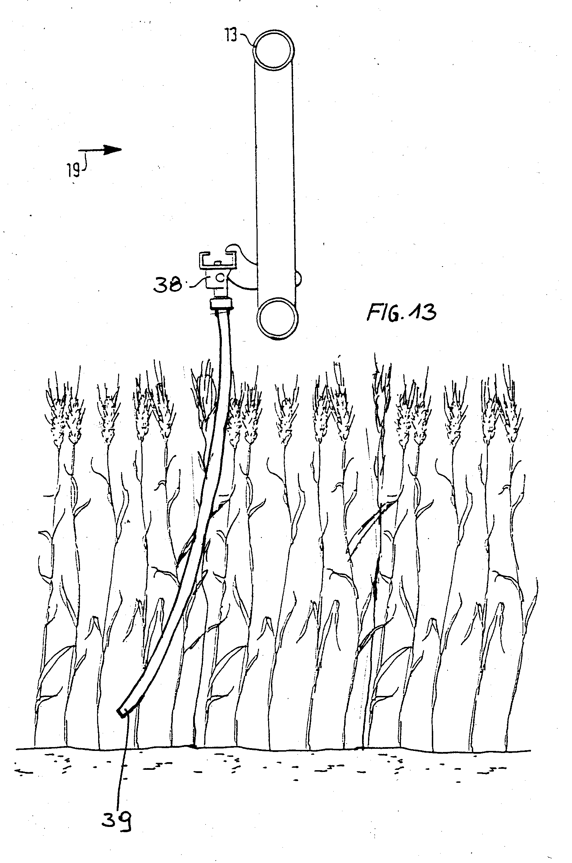

Bei dem Ausführungsbeispiel gemäß den Fig. 10 bis 13 sind die Düsenleisten 16 gemäß der vorherigen Ausstattung gegen die Düsenleisten 38 ausgetauscht worden. Somit ist das Spritzgestänge 10 mit den an den Düsenleisten 16 angeordneten Schleppschläuchen 39 ausgestattet, so daß die Feldspritze beispielsweise für die Flüssigdüngung eingesetzt werden kann. Der Austausch der Düsenleisten 16 gegen die Düsenleisten 38 oder umgekehrt erfolgt in der weiter oben beschriebenen Weise. Selbstverständlich können, falls erforderlich, mehrere Düsenleisten 16 und 38 gleichzeitig an dem Spritzgestänge zugeordnet sein.

**Patentansprüche**

1. Spritzvorrichtung zum Ausbringen von flüssigen Spritzmitteln, z.B. von Düngemitteln und/oder Unkrautvernichtungsmitteln und/oder Pflanzenschutzmitteln auf landwirtschaftlichen Kulturpflanzen (Kulturen), bestehend aus einem an einem Fahrzeug befestigbaren Spritzenträger sowie aus einem am Spritzenträger in unterschiedlichen Höhenlagen einstellbar gehaltenen horizontalen, sich senkrecht zur Fahrtrichtung des Fahrzeuges erstreckenden, als Ausleger ausgebildeten Spritzgestänge mit einer Vielzahl von an diesem Ausleger vorgesehenen Düsen, deren Austrittsöffnungen mit ihren die Düsenrichtung bestimmenden Achsen beim Gebrauch der Vorrichtung nach unten gerichtet sind, wobei beim Gebrauch der Vorrichtung die unteren Auslegerteile eine über die Düsen in Düsenrichtung nach unten vorstehende Umlegerkante bilden sowie sich über die Länge des Auslegers und dabei quer bzw. senkrecht zur Fahrtrichtung des Fahrzeuges erstrecken und in Fahrtrichtung gesehen vor den Düsen angeordnet ist, dadurch gekennzeichnet, daß das Spritzgestänge (10) in Fahrtrichtung (19) gesehen, auf seiner Rückseite (18) einen Freiraum (20) zur Arretierung der Düsen (17,39) in unterschiedlichen Höhen- und/oder Winkellagen gegenüber dem Spritzgestänge (10) aufweist.

2. Spritzvorrichtung nach Anspruch 1, dadurch gekennzeichnet, daß sich der Freiraum (20) in Höhenrichtung im Bereich zwischen dem oberen (13) und dem unteren Gurt (14) des Spritzgestänges (10) und in Fahrtrichtung (19) in einem Abstand (a) hinter den Spritzgestängeabschnitten (7,8,9) des Auslegers (10) erstreckt.

3. Spritzvorrichtung nach einem oder mehreren der vorstehenden Ansprüche, dadurch gekennzeichnet, daß der Freiraum (20) so bemessen ist, so daß sich die Spritzgestängeabschnitte (7,8,9) unabhängig von der Düsenarretierung am Spritzgestänge (10) von der Arbeitsin die Transportstellung überführen läßt.

4. Spritzvorrichtung nach einem oder mehreren der vorstehenden Ansprüche, dadurch gekennzeichnet, daß der geringste Abstand zwischen dem oberen (13) und dem unteren Gurt (14) des Spritzgestänges (10) in etwa dem maximalen Verstellbereich der einstellbaren, unterschiedlichen Höhenlagen der Düsen (17) gegenüber dem unteren Gurt (14) des Spritzgestänges (10) entspricht.

5. Spritzvorrichtung nach einem oder mehreren der vorstehenden Ansprüche, dadurch gekennzeichnet, daß der Verstellbereich der Höhen- und/oder Winkellagen der Düsen (17) auf die maximale Wachstumshöhe der zu behandelnden Kulturpflanzen, von z.B. 1,2 m, abgestimmt ist.

6. Spritzvorrichtung nach einem oder mehreren der vorstehenden Ansprüche, dadurch gekennzeichnet, daß die Düsen (17), in Fahrtrichtung (19) gesehen, in einem Abstand (a) von ca. 10 cm hinter den Spritzgestängeabschnitten (7,8,9) des Auslegers (10) angeordnet sind.

7. Spritzvorrichtung nach einem oder mehreren der vorstehenden Ansprüche, dadurch gekennzeichnet, daß die Düsen (17) eines jeden Spritzgestängeabschnittes (7,8,9) an einer Düsenleiste (16) angeordnet sind.

8. Spritzvorrichtung zum Ausbringen von flüssigen Spritzmitteln, z.B. von Düngemitteln und/oder Unkrautvernichtungsmitteln und/oder Pflanzenschutzmitteln auf landwirtschaftlichen Kulturpflanzen (Kulturen), bestehend aus einem an einem Fahrzeug befestigbaren Spritzenträger sowie aus einem am Spritzenträger in unterschiedlichen Höhenlagen einstellbar gehaltenen horizontalen, sich senkrecht zur Fahrtrichtung des Fahrzeuges erstreckenden, als Ausleger ausgebildeten Spritzgestänge mit einer Vielzahl von an diesem Ausleger vorgesehenen Düsen, deren Austrittsöffnungen mit ihren die Düsenrichtung bestimmenden Achsen beim Gebrauch der Vorrichtung nach unten gerichtet sind, wobei beim Gebrauch der Vorrichtung die unteren Auslegerteile eine über die Düsen in Düsenrichtung nach unten vorstehende Umlegerkante bilden sowie sich über die Länge des Auslegers und dabei quer bzw. senkrecht zur Fahrtrichtung des Fahrzeuges erstrecken und in Fahrtrichtung gesehen vor den Düsen angeordnet ist, dadurch gekennzeichnet, daß die Düsen (17,39) eines jeden Spritzgestängeabschnitts (7,8,9) an einer Düsenleiste (16,38) angeordnet, welche abnehmbar und austauschbar an dem Spritzgestänge (10) angeordnet sind.

9. Spritzvorrichtung nach einem oder mehreren der vorstehenden Ansprüche, dadurch gekennzeichnet, daß die Düsenleisten (16) mittels Schnellverschlüsse (23) in unterschiedlichen Höhen- und/oder Winkellagen an den jeweiligen Spritzgestängeabschnitten (7,8,9) des Auslegers (10) befestigbar sind.

10. Spritzvorrichtung nach einem oder mehreren der vorstehenden Ansprüche, dadurch gekennzeichnet, daß die Düsenleisten (16) gegen Düsenleisten (38) mit andersartig ausgebildeten Düsen (39), z.B. für die Flüssigdüngung, komplett und einfach austauschbar sind.

11. Spritzvorrichtung nach einem oder mehreren der vorstehenden Ansprüche, dadurch gekennzeichnet, daß für die verschiedenen Einsatzzwecke mehrere, unterschiedliche Düsenarten aufweisende Düsenleisten (16,38) gleichzeitig am Ausleger (10) angeordnet sind.

12. Spritzvorrichtung nach einem oder mehreren der vorstehenden Ansprüche, dadurch gekennzeichnet, daß das Spritzgestänge (10) eine über die gesamte Breite des Spritzgestänges (10) sich erstreckende Schutzvorrichtung (37) aufweist.

13. Spritzvorrichtung nach einem oder mehreren der vorstehenden Ansprüche, dadurch gekennzeichnet, daß sich die Schutzvorrichtung (37) zumindest im Bereich der über die Düsen (17) in Düsenrichtung nach unten zu verstellenden Umlegerkante (14) erstreckt.

14. Spritzvorrichtung nach einem oder mehreren der vorstehenden Ansprüche, dadurch gekennzeichnet, daß die Schutzvorrichtung (37) am Spritzgestänge (10) befestigbar ist, daß die Schutzvorrichtung (37) in unterschiedlichen Positionen am Spritzgestänge (10) befestigbar ist.

15. Spritzvorrichtung nach einem oder mehreren der vorstehenden Ansprüche, dadurch gekennzeichnet, daß die Schutzvorrichtung (37) ein nach hinten offenes, der Fahrtrichtung (14) entgegengerichtetes, einen in bezug auf den unteren Gurt (14) einen größeren Raduis aufweisendes Abweiselement ist.

16. Spritzvorrichtung nach einem oder mehreren der vorstehenden Ansprüche, dadurch gekennzeichnet, daß die Schutzvorrichtung (37) aus mehreren, den einzelnen Abschnitten (7,8,9) des Spritzgestänges (10) entsprechenden, drehbar gelagerten Abweiselementen besteht.

17. Spritzvorrichtung nach einem oder mehreren der vorstehenden Ansprüchen, dadurch gekennzeichnet, daß die Schutzvorrichtung (37) in vertikaler Ebene verstellbar am Spritzgestänge (10) anbringbar ist, daß die Schutzvorrichtung (37) das Spritzgestänge (10) nach unten in einstellbaren Abständen überragt.

18. Spritzvorrichtung nach einem oder mehreren der vorstehenden Ansprüchen, dadurch gekennzeichnet, daß die Schutzvorrichtung (37) mittels Schnellverschlüssen in unterschiedlichen Höhen- und/oder Winkellagen an den jeweiligen Spritzgestängeabschnitten (7,8,9) des Auslegers (10) befestigbar ist.

FIG. 1

EP 0 471 963 A2

FIG. 2

FIG. 3

EP 0 471 963 A2

FIG. 4

FIG. 5

FIG. 6

FIG. 7

13

10

17

5 cm

35

34

14

36

2/3

FIG. 8

FIG. 9

FIG. 10

FIG. 11

EP 0 471 963 A2

FIG. 12

FIG.13